# EUROPEAN PATENT APPLICATION

(11) **EP 3 608 352 A1**
(43) Date of publication of application: **12.02.2020**
(21) Application number: 18781105.4
(22) Date of filing: 02.04.2018
(51) Int. Cl.: C08J 3/12, C08G 77/06, C08G 77/20

(54) **SILICONE PARTICLES AND METHOD FOR PRODUCING SAME**

(30) Priority: 06.04.2017 JP 2017075729
(71) Applicant: Shin-Etsu Chemical Co., Ltd., Tokyo 100-0004 (JP)
(72) Inventor: INOKUCHI Yoshinori, Annaka-shi Gunma 379-0224 (JP)
(74) Representative: Mewburn Ellis LLP
(86) International application number: PCT/JP2018/014128
(87) International publication number: WO 2018/186354

(57) **Abstract**

Silicone particles in which the surface of silicone elastomer spherical particles having a volume-average particle size of 0.1-100 µm is coated by a polyorganosilsesquioxane containing a methyl silsesquioxane unit represented by compositional formula (1)

CH₃SiO_{3/2} (1)

and a (meth)acryloxyalkyl silsesquioxane unit represented by compositional formula (2) or (3) 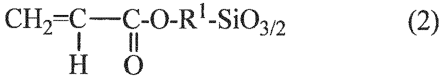 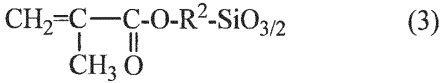 (in the formula, R¹ is a C2-6 alkylene group and R² is a C2-6 alkylene group) wherein the mass of the polyorganosilsesquioxane is 0.5-25 mass parts per 100 mass parts of silicone elastomer spherical particles.

## Description

### TECHNICAL FIELD

The present invention relates to silicone particles in which the surfaces of spherical silicone elastomer particles are coated with a polyorganosilsesquioxane, and to a method for producing the same.

### BACKGROUND ART

Silicone elastomer particles having rubber elasticity are used as a resin stress relaxing agent. For example, thermoset resins such as epoxy resins are utilized in electronic and electrical component packaging, and silicone elastomer particles are included in the resin in order to make the package resistant to breakage even when subjected to stress from expansion of the resin owing to heat generation by the electrical components. However, because silicone elastomer particles have a high tendency to agglomerate and a low dispersibility in resins, a sufficient resin stress relaxing effect by the silicone elastomer particles is not obtained. Another drawback has been a decrease in the strength of the resin due to agglomerated silicone elastomer particles.

In order to resolve these problems, the inventor has disclosed silicone particles which are spherical fine particles of silicone rubber coated with a polyorganosilsesquioxane resin (Patent Document 1). These silicone particles are characterized by having rubber elasticity, a low tendency to agglomerate, and a high dispersibility in resins. In particular, silicone particles in which polymethylsilsesquioxane is used as the polyorganosilsesquioxane have the lowest tendency to agglomerate and the highest dispersibility. Such silicone particles can be obtained by adding an organotrialkoxysilane to an aqueous dispersion of spherical fine particles of silicone rubber, and subjecting the organotrialkoxysilane to hydrolysis and condensation reactions under specific conditions.

However, when such silicone particles are included in resins that make up articles such as printed boards in which there is a cutting operation after molding, the silicone particles are shed from the face of the cut during the cutting operation. Moreover, there has been a concern that the silicone particles thus shed will deposit onto the surface of the article, causing defects in the wiring operation.

It is conceivable that the silicone particles will not be shed if the adhesiveness between the resin and the silicone particles is improved. To this end, one thought is to have the polyorganosilsesquioxane include organic groups having a reactivity with the resin. For example, in order to include (meth)acryloxyalkyl groups in the polyorganosilsesquioxane, part of the organotrialkoxysilane serving as a starting material for the polyorganosilsesquioxane could be made a poly(meth)acryloxyalkyltrialkoxysilane. However, such silicone particles consisting of spherical silicone elastomer particles that are coated with a (meth)acryloxyalkylsilsesquioxane-containing polyorganosilsesquioxane have a strong tendency to agglomerate and a poor dispersibility in resin.

### PRIOR ART DOCUMENTS

### PATENT DOCUMENTS

Patent Document 1: JP-A H07-196815

### SUMMARY OF THE INVENTION

### TECHNICAL PROBLEM

The present invention was arrived at in the light of the above circumstances. The object of this invention is to provide silicone particles containing (meth)acryloxyalkyl groups on the particle surfaces, which particles have rubbery elasticity, a low tendency to agglomerate and a high dispersibility in resins. Another object of the invention is to provide a method for producing such silicone particles.

### SOLUTION TO THE PROBLEM

The inventor, as a result of having conducted extensive investigations in order to achieve this object, has discovered that the silicone particles described below resolve the above problems, which discovery ultimately led to the present invention.

Accordingly, the invention provides the following silicone particles and method for producing such particles.
[1] Silicone particles which are made of spherical silicone elastomer particles having a volume mean particle size of from 0.1 to 100 µm and are covered on surfaces thereof with a polyorganosilsesquioxane containing methylsilsesquioxane units of compositional formula (1) below

   CH₃SiO_{3/2} (1)

   and (meth)acryloxyalkylsilsesquioxane units of compositional formula (2) or (3) below 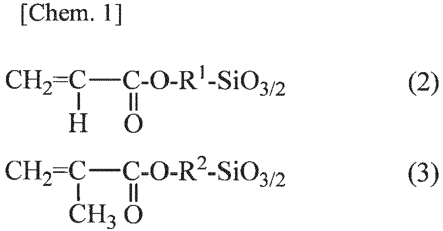 (wherein R¹ is an alkylene group of 2 to 6 carbon atoms and R² is an alkylene group of 2 to 6 carbon atoms), which silicone particles are obtained by the hydrolytic condensation of methyltrimethoxysilane and (meth)acryloxyalkyltrimethoxysilane in the presence of spherical silicone elastomer particles having a volume mean particle size of from 0.1 to 100 µm, water, an alkaline substance and one or more substance selected from cationic surfactants and cationic water-soluble polymeric compounds, and have an amount of polyorganosilsesquioxane that is from 0.5 to 25 parts by weight per 100 parts by weight of the spherical silicone elastomer particles.
[2] The silicone particles of [1], wherein the molar ratio of methylsilsesquioxane units to (meth)acryloxyalkylsilsesquioxane units in the polyorganosilsesquioxane (methylsilsesquioxane units : (meth)acryloxyalkylsilsesquioxane units) is from 99:1 to 10:90.
[3] A method for producing silicone particles which are made of spherical silicone elastomer particles having a volume mean particle size of from 0.1 to 100 µm and are covered on surfaces thereof with a polyorganosilsesquioxane containing methylsilsesquioxane units of compositional formula (1) below

   CH₃SiO_{3/2} (1)

   and (meth)acryloxyalkylsilsesquioxane units of compositional formula (2) or (3) below 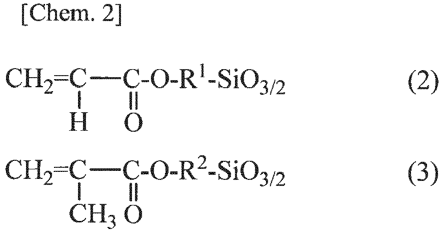 (wherein R¹ is an alkylene group of 2 to 6 carbon atoms, and R² is an alkylene group of 2 to 6 carbon atoms) and which have an amount of polyorganosilsesquioxane that is from 0.5 to 25 parts by weight per 100 parts by weight of the spherical silicone elastomer particles, the method including the step of effecting the hydrolytic condensation of methyltrimethoxysilane and (meth)acryloxyalkyltrimethoxysilane in the presence of spherical silicone elastomer particles having a volume mean particle size of from 0.1 to 100 µm, water, an alkaline substance, and one or more substance selected from cationic surfactants and cationic water-soluble polymeric compounds.
[4] The production method of [3], wherein the amount of the one or more substance selected from cationic surfactants and cationic water-soluble polymeric compounds is from 0.001 to 1 part by weight per 100 parts by weight of water.

### ADVANTAGEOUS EFFECTS OF THE INVENTION

The silicone particles of the invention have a high resin stress relaxing effect because their tendency to agglomerate is low and therefore the dispersibility in resin is high. Also, because (meth)acryloxyalkyl groups are included at the particle surfaces, the adhesiveness with resins that can react with (meth)acryloxyalkyl groups is better, making it possible to prevent silicone particles from being shed when the resin is cut.

### DESCRIPTION OF EMBODIMENTS

The invention is described more fully below.

The silicone particles of the invention are silicone particles which are made up of spherical silicone elastomer particles that have a volume mean particle size of from 0.1 to 100 µm and are covered on surfaces thereof with a polyorganosilsesquioxane containing (meth)acryloxyalkylsilsesquioxane units, in which the amount of polyorganosilsesquioxane is from 0.5 to 25 parts by weight per 100 parts by weight of the spherical silicone elastomer particles, and which are obtained by the production method described below.

### SPHERICAL SILICONE ELASTOMER PARTICLES

The volume mean particle size of the spherical silicone elastomer particles used in the silicone particles of the invention is from 0.1 to 100 µm, preferably from 0.5 to 40 µm, and more preferably from 1 to 20 µm. When the spherical silicone elastomer particles have a volume mean particle size below 0.1 µm, the silicone particles obtained using them have a high tendency to agglomerate and do not readily disperse down to primary particles in resins. When the spherical silicone elastomer particles have a volume mean particle size larger than 100 µm, the silicone particles obtained using them adversely affect the strength of the resin and do not satisfactory exhibit a resin stress relaxing effect.

The volume mean particle size (MV value) of the spherical silicone elastomer particles is measured by a method that is suitably selected according to the particle size from, for example, microscope methods, light scattering methods, laser diffraction methods, sedimentation in liquid methods and electrical sensing zone methods. For example, at a particle size of at least 0.1 µm but less than 1 µm, it is desirable to carry out measurement by a light scattering method; at a particle size in the range of 1 to 100 µm, it is desirable to carry out measurement by an electrical sensing zone method. In this Specification, "spherical" does not mean that the particle shapes are limited only to true spheres; rather, it is meant to encompass also distorted ellipsoids in which the ratio of the length of the longest axis to the length of the shortest axis (aspect ratio) is on average generally in the range of from 1 to 4, preferably from 1 to 2, more preferably from 1 to 1.6, and even more preferably more 1 to 1.4. The particle shapes can be confirmed by examination with an optical microscope or an electron microscope.

The silicone elastomer making up the spherical silicone elastomer particles is preferably free of tack and has a rubber hardness, as measured with a type A durometer in accordance with JIS K 6253, in the range of preferably from 5 to 90, and more preferably from 20 to 70. At a rubber hardness of less than 5, the silicone particles obtained using the silicone elastomer may have a high tendency to agglomerate and may be difficult to disperse down to primary particles in resins. At a rubber hardness greater than 90, the resin stress relaxing effect by silicone particles obtained using the silicone elastomer may decrease. The rubber hardness is a value measured by fabricating test specimens composed of the spherical silicone elastomer particles and having shape and size specified in JIS K 6253.

The silicone elastomer is a cured product having linear organosiloxane blocks of the formula -(R³₂SiO_{2/2})ₙ-. Here, each R³ in the formula is a like or unlike, substituted or unsubstituted monovalent hydrocarbon group of 1 to 30 carbon atoms, and n is a positive number from 5 to 5,000.

In the above formula, R³ is exemplified by alkyl groups such as methyl, ethyl, propyl, butyl, pentyl, hexyl, heptyl, octyl, decyl, undecyl, dodecyl, tetradecyl, pentadecyl, hexadecyl, heptadecyl, octadecyl, nonadecyl, icosyl, henicosyl, docosyl, tricosyl, tetrasyl and triacontyl groups; aryl groups such as phenyl, tolyl and naphthyl groups; aralkyl groups such as benzyl and phenethyl groups; alkenyl groups such as vinyl and allyl groups; cycloalkyl groups such as cyclopentyl, cyclohexyl and cycloheptyl groups; and hydrocarbon groups in which some or all hydrogen atoms bonded to carbon atoms on the foregoing groups are substituted with atoms such as halogen atoms (fluorine, chlorine, bromine or iodine atoms) and/or substituents such as acryloyloxy, methacryloyloxy, epoxy, glycidoxy and carboxyl groups.

The silicone elastomer can be obtained from, for example, a curable liquid silicone. Such curing is exemplified by curing via condensation reactions between methoxysilyl groups (=SiOCH₃) and hydroxysilyl groups (=SiOH), radical reactions between mercaptopropylsilyl groups (=Si-C₃H₆SH) and vinylsilyl groups (=SiCH=CH₂), or addition reactions between vinylsilyl groups (=SiCH=CH₂) and hydrosilyl groups (=SiH). In terms of reactivity, curing by an addition reaction is preferred.

In cases where the silicone elastomer is obtained by curing via an addition reaction, a curable liquid silicone composition wherein, in combination (I) or (II) below, an organopolysiloxane having a monovalent olefinically unsaturated group and an organohydrogenpolysiloxane are included in a ratio such that the number of hydrosilyl groups per monovalent olefinically unsaturated group is from 0.5 to 2 should be addition-reacted in the presence of a platinum family metal-based catalyst:
(I) the combination of an organopolysiloxane of average compositional formula (4) below

   R⁴ₐR⁵_{b}SiO_{(4-a-b)/2} (4)

   having at least two monovalent olefinically unsaturated groups per molecule with an organohydrogenpolysiloxane of average compositional formula (5) below

   R⁶_{c}H_{d}SiO(_{4-c-d)/2} (5)

   having at least three hydrogen atoms (H) bonded to silicon atoms (Si) on the molecule;
(II) the combination of an organopolysiloxane of average composition formula (4') below

   R⁴ₐR⁵_{b}SiO_{(4-a-b)/2} (4')

   having at least three monovalent olefinically unsaturated groups per molecule with an organohydrogenpolysiloxane of general compositional formula (5') below

   R⁶_{c}H_{d}SiO_{(4-c-d)/2} (5')

   having at least two silicon-bonded hydrogen atoms per molecule.

Here, R⁴ in the formula is a substituted or unsubstituted monovalent hydrocarbon group of 1 to 30 carbon atoms, exclusive of aliphatic unsaturated groups, and R⁵ is a monovalent olefinically unsaturated group of 2 to 6 carbon atoms.

The subscripts 'a' and 'b' are positive numbers such that 0 < a < 3, 0 < b ≤ 3 and 0.1 ≤ a+b ≤ 3, and preferably such that 0 < a ≤ 2.295, 0.005 ≤ b ≤ 2.3 and 0.5 ≤ a+b ≤ 2.3. R⁶ is a substituted or unsubstituted monovalent hydrocarbon group of 1 to 30 carbon atoms, exclusive of aliphatic unsaturated groups. The subscripts 'c' and 'd' are positive numbers such that 0 < c < 3, 0 < d ≤ 3 and 0.1 ≤ c+d ≤ 3, and preferably such that 0 < c ≤ 2.295, 0.005 ≤ d ≤ 2.3 and 0.5 ≤ c+d ≤ 2.3.

R⁴ is exemplified by alkyl groups such as methyl, ethyl, propyl, butyl, pentyl, hexyl, heptyl, octyl, decyl, undecyl, dodecyl, tetradecyl, pentadecyl, hexadecyl, heptadecyl, octadecyl, nonadecyl, icosyl, henicosyl, docosyl, tricosyl, tetrasyl and triacontyl groups; aryl groups such as phenyl, tolyl and naphthyl groups; aralkyl groups such as benzyl and phenethyl groups; cycloalkyl groups such as cyclopentyl, cyclohexyl and cycloheptyl groups; and hydrocarbon groups in which some or all hydrogen atoms bonded to carbon atoms on the foregoing groups are substituted with atoms such as halogen atoms (fluorine, chlorine, bromine or iodine atoms) and/or substituents such as acryloyloxy, methacryloyloxy, epoxy, glycidoxy and carboxyl groups. Industrially, it is preferable for at least 50 mol% of all the R⁴ groups to be methyl groups.

R⁵ is exemplified by vinyl, allyl, butenyl, pentenyl and hexenyl groups, with vinyl groups being industrially preferred. R⁶ is exemplified in the same way as R⁴ above.

When the kinematic viscosity at 25°C of the monovalent olefinically unsaturated group-containing organopolysiloxane and the organohydrogenpolysiloxane exceeds 100,000 mm²/s, obtaining particles having a narrow distribution becomes difficult in the subsequently described production method. Hence, the kinematic viscosity is preferably in the range of from 1 to 100,000 mm²/s, and is more preferably 10,000 mm²/s or less. The olefinically unsaturated group-containing organopolysiloxane and organohydrogenpolysiloxane have structures which may be linear, cyclic or branched, although one that is linear is especially preferred. This kinematic viscosity is a value measured with an Ostwald viscometer.

The linear monovalent olefinically unsaturated group-containing organopolysiloxane is exemplified by compounds of the following formula. 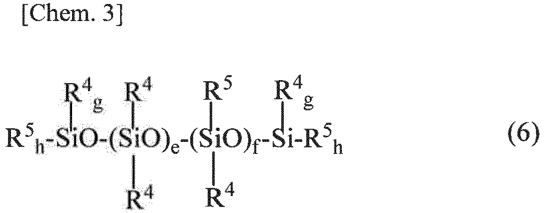 In the formula, R⁴ and R⁵ represent the same groups as in average compositional formula (4) or (4') above, e is an integer from 1 to 1,500, f is 0 or an integer from 1 to 500, g and h are each 0, 1, 2 or 3, g+h = 3, and 2h+f ≥ 2.

In cases that correspond to average compositional formula (4) above, 2h+f is selected such that there are at least two monovalent olefinically unsaturated groups per molecule; in cases that correspond to average compositional formula (4') above, 2h+f is selected such that there are at least three monovalent olefinically unsaturated groups per molecule.

The linear organohydrogenpolysiloxane is exemplified by compounds of general formula (7) below. 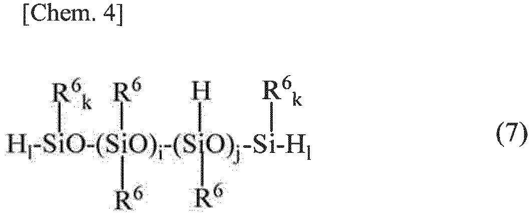 In the formula, R⁶ represents the same group as in average compositional formula (5) or (5') above, i is an integer from 1 to 1,500, j is an integer from 1 to 500, k and 1 are each 0, 1, 2 or 3, k+1 = 3, and 21+j ≥ 2.

In cases that correspond to average compositional formula (5) above, 2l+j is selected such that there are at least three hydrogen atoms (H) bonded to silicon atoms (Si) per molecule; in cases that correspond to average compositional formula (5') above, 2l+j is selected such that there are at least two silicon-bonded hydrogen atoms per molecule.

As mentioned above, in cases where the silicone elastomer is obtained by curing via addition reactions, it is preferable to carry out the addition reactions using the combination of an olefinically unsaturated group-containing organopolysiloxane having at least two monovalent olefinically unsaturated groups per molecule with an organohydrogenpolysiloxane having at least three silicon-bonded hydrogen atoms, or the combination of an olefinically unsaturated group-containing organopolysiloxane having at least three monovalent olefinically unsaturated groups per molecule with an organohydrogenpolysiloxane having at least two silicon-bonded hydrogen atoms. By setting the polysiloxane structure and combination in this way, the resulting silicone elastomer becomes even more tack-free.

Platinum family metal-based catalysts that may be used in these reactions are exemplified by known catalysts that can be used in hydrosilylation reactions. Specific examples include uncombined platinum family metals such as platinum (including platinum black), rhodium and palladium; platinum chloride, chloroplatinic acid and chloroplatinic acid salts such as H₂PtCl₄·mH₂O, H₂PtCl₆·mH₂O, NaHPtCl₆·mH₂O, KHPtCl₆·mH₂O, Na₂PtCl₆·mH₂O, K₂PtCl₄·mH₂O, PtCl₄·mH₂O, PtCl₂ and Na₂HPtCl₄·mH₂O (wherein m is an integer from 0 to 6, and is preferably 0 or 6); alcohol-modified chloroplatinic acids (see U.S. Patent No. 3,220,972); complexes of platinum chloride or chloroplatinic acid and an olefin (see U.S. Patent Nos. 3,159,601, 3,159,662 and 3,775,452), complexes of chloroplatinic acid and vinyl group-containing siloxanes, and complexes of platinum and vinyl group-containing siloxanes; platinum family metals such as platinum black or palladium that are supported on a support such as alumina, silica or carbon; rhodium-olefin complexes; and chlorotris(triphenylphosphine)rhodium (Wilkinson's catalyst).

The content of the platinum family metal-based catalyst may be an amount that is effective as a hydrosilylation reaction catalyst, this being an amount such that the amount of platinum family metal in the catalyst with respect to the total amount of the curable liquid silicone composition, expressed by weight, is typically from about 0.1 ppm to about 500 ppm, preferably from about 0.1 ppm to about 200 ppm, and more preferably from about 0.5 ppm to about 100 ppm.

The spherical silicone elastomer particles that make up the silicone particles of the invention may include therein silicone oils, organosilanes, inorganic powders, organic powders and the like.

The spherical silicone elastomer particles can be produced in the form of an aqueous dispersion by a known method. For example, in cases where the silicone elastomer is obtained by curing via addition reactions, the method may be one that involves adding a surfactant and water to a curable liquid silicone composition composed of the above olefinically unsaturated group-containing organopolysiloxane and the organohydrogenpolysiloxane, carrying out emulsification so as to form an emulsion, and then adding a platinum family metal-based catalyst and carrying out an addition reaction.

The surfactant used here may be a nonionic surfactant, a cationic surfactant or an amphoteric surfactant. An anionic surfactant may suppress the action of the cationic surfactant or cationic water-soluble polymer that is used in the subsequently described polyorganosilsesquioxane coating step, or may cause a loss in dispersibility of the spherical silicone elastomer particles when the cationic surfactant or cationic water-soluble polymer is added, giving rise to agglomeration.

Examples of nonionic surfactants that may be used here include polyoxyethylene alkyl ethers, polyoxyethylene polyoxypropylene alkyl ethers, polyoxyethylene alkyl phenyl ethers, polyethylene glycol fatty acid esters, sorbitan fatty acid esters, polyoxyethylene sorbitan fatty acid esters, polyoxyethylene sorbitol fatty acid esters, glycerol fatty acid esters, polyoxyethylene glycerol fatty acid esters, polyglycerol fatty acid esters, propylene glycol fatty acid esters, polyoxyethylene castor oil, polyoxyethylene hydrogenated castor oil, polyoxyethylene hydrogenated castor oil fatty acid esters, polyoxyethylene alkyl amines, polyoxyethylene fatty acid amides, polyoxyethylene-modified organopolysiloxanes and polyoxyethylene polyoxypropylene-modified organopolysiloxanes.

Examples of cationic surfactants include alkyltrimethylammonium salts, dialkyldimethylammonium salts, polyoxyethylene alkyldimethylammonium salts, dipolyoxyethylene alkylmethylammonium salts, tripolyoxyethylene alkylammonium salts, alkylbenzyldimethylammonium salts, alkylpyridium salts, monoalkylamine salts and monoalkylamide amine salts.

Examples of amphoteric surfactants include alkyldimethylamine oxides, alkyldimethylcarboxybetaines, alkylamidopropyldimethylcarboxybetaines, alkyl hydroxysulfobetaines and alkylcarboxymethylhydroxyethylimidazolinium betaines.

These surfactants may be of one type used alone or two or more types may be used in suitable combination. Of these, nonionic surfactants which, in a small amount, can emulsify the above-described curable liquid silicone composition and render it into fine particles are preferred. When too much surfactant is included, coating the polyorganosilsesquioxane by the subsequently described production method becomes difficult. The amount of surfactant used is preferably 20 parts by weight or less per 100 parts by weight of the curable liquid silicone composition. When the amount of surfactant used per 100 parts by weight of the curable liquid silicone composition is less than 0.01 part by weight, it is difficult to render the curable liquid silicone composition into fine particles. Hence, the amount of surfactant is set in the range of preferably from 0.01 to 20 parts by weight, and more preferably from 0.05 to 5 parts by weight.

Emulsification may be carried out using a common emulsifying disperser. Examples of common emulsifying dispersers include high-speed rotary centrifugal radiation-type stirrers such as homogenizing dispersers, high-speed rotary shear-type stirrers such as homogenizing mixers, high-pressure jet-type emulsifying dispersers such as homogenizers, colloid mills and ultrasonic emulsifiers.

In cases where the dispersibility of the platinum family metal-based catalyst in water is poor, the platinum family metal-based catalyst is preferably added in a surfactant-dissolved state to the emulsion. The surfactant is exemplified by those mentioned above, with a nonionic surfactant being especially preferred. The addition reaction may be carried out at room temperature, although in cases where the reaction does not go to completion, it may be carried out under heating at below 100°C.

### POLYORGANOSILSESQUIOXANE

In the silicone particles of the invention, the polyorganosilsesquioxane covering the surfaces of the spherical silicone elastomer particles is preferably in a particulate form, with the size of the particles being preferably 200 nm or less, and especially from 1 to 200 nm. By setting the size of the polyorganosilsesquioxane particles to 200 nm or less, the dispersibility is further increased. This can be confirmed by examining the surface of the silicone particles with an electron microscope.

The amount of polyorganosilsesquioxane is from 0.5 to 25 parts by weight, and preferably from 1 to 15 parts by weight, per 100 parts by weight of the spherical silicone elastomer particles. At less than 0.5 part by weight of polyorganosilsesquioxane, the silicone particles have a high tendency to agglomerate and a low dispersibility; at more than 25 parts by weight, the resin stress relaxing ability of the silicone particles becomes poor.

The polyorganosilsesquioxane is a resinous solid that includes methylsilsesquioxane units of compositional formula (1) below

CH₃SiO_{3/2} (1)

and (meth)acryloxyalkylsilsesquioxane units of compositional formula (2) or (3) below 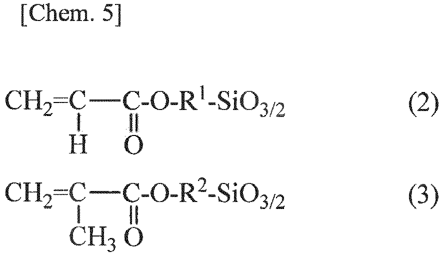 (wherein R¹ is an alkylene group of 2 to 6 carbon atoms and R² is an alkylene group of 2 to 6 carbon atoms) and is crosslinked in the form of a three-dimensional network.

R¹ and R² are alkylene groups of 2 to 6 carbon atoms. Specific examples of the alkylene groups of 2 to 6 carbon atoms include methylene, ethylene, propylene, butylene, pentylene and hexylene groups. Propylene groups are especially preferred.

The molar ratio of methylsilsesquioxane units and (meth)acryloxyalkylsilsesquioxane units (methylsilsesquioxane units : (meth)acryloxyalkylsilsesquioxane units) on the polyorganosilsesquioxane is preferably from 99:1 to 10:90, more preferably from 99:1 to 50:50, and even more preferably from 95:5 to 70:30. When there are too few (meth)acryloxyalkylsilsesquioxane units, the adhesiveness with resins that can react with (meth)acryloxyalkyl groups may decrease; when there are too many such units, the silicone particles may have an increased tendency to agglomerate and a decreased dispersibility.

Aside from methylsilsesquioxane units and (meth)acryloxyalkylsilsesquioxane units, the polyorganosilsesquioxane may include one or more type of group selected from R⁷SiO_{3/2} units, R⁸₂SiO_{2/2} units, R⁸₃SiO_{1/2} units and SiO_{4/2} units, within a range that does not detract from such properties as the non-agglomerability of the resulting silicone particles and their dispersibility in resins. The sum of the methylsilsesquioxane units and (meth)acryloxyalkylsilsesquioxane units may be 100 mol (unit) % of all the units, or may be at least 80 mol (unit) % and less than 100 mol (unit) %, with the balance being the other units mentioned above.

R⁷ in the formula is a substituted or unsubstituted monovalent hydrocarbon group of 1 to 20 carbon atoms, exclusive of methyl groups and (meth)acryloxyalkyl groups. Specific examples of R⁷ include alkyl groups such as ethyl, propyl, butyl, pentyl, hexyl, heptyl, octyl, decyl, undecyl, dodecyl, tetradecyl, pentadecyl, hexadecyl, heptadecyl, octadecyl, nonadecyl and icosyl groups; aryl groups such as phenyl, tolyl and naphthyl groups; aralkyl groups such as benzyl and phenethyl groups; alkenyl groups such as vinyl and allyl groups; cycloalkyl groups such as cyclopentyl, cyclohexyl and cycloheptyl groups; and hydrocarbon groups in which some or all hydrogen atoms bonded to carbon atoms in these groups are substituted with atoms such as halogen atoms (fluorine, chlorine, bromine or iodine atoms) and/or substituents such as amino, epoxy, glycidoxy, mercapto and carboxyl groups. R⁸ in the formula is independently a substituted or unsubstituted monovalent hydrocarbon group of 1 to 20 carbon atoms. R⁸ is exemplified by the same groups as R⁷, and also methyl groups and (meth)acryloxyalkyl groups.

### METHOD FOR PRODUCING SILICONE PARTICLES

The silicone particles of the invention can be obtained by coating the surfaces of spherical silicone elastomer particles with a polyorganosilsesquioxane, such as by effecting the hydrolytic condensation of methyltrimethoxysilane and (meth)acryloxy-alkyltrimethoxysilane in the presence of spherical silicone elastomer particles having a volume mean particle size of from 0.1 to 100 µm, water, an alkaline substance, and one or more substance selected from cationic surfactants and cationic water-soluble polymeric compounds.

### Spherical Silicone Elastomer Particles

The spherical silicone elastomer particles that are used should be particles having a volume mean particle size of from 0.1 to 100 µm, such as particles that have been produced in the form of the above-described aqueous dispersion. In cases where spherical silicone elastomer particles produced in the form of an aqueous dispersion are used, the aqueous dispersion may be used directly as is, or may be used following the addition of water.

Prior to adding the methyltrimethoxysilane and (meth)acryloxyalkyltrimethoxysilane, the content of spherical silicone elastomer particles within the dispersion containing spherical silicone elastomer particles, water, an alkaline substance and one or more substance selected from cationic surfactants and cationic water-soluble polymeric compounds (which dispersion is sometimes referred to below as the "hydrolytic condensation reaction dispersion") is in the range of preferably from 1 to 150 parts by weight, and more preferably from 5 to 70 parts by weight, per 100 parts by weight of water. At a content of less than 1 part by weight, the target silicone particle formation efficiency may become low; at more than 150 parts by weight, it may be difficult to coat the surfaces of the spherical silicone elastomer particles with the polyorganosilsesquioxane resin, in addition to which agglomeration and fusion of the silicone particles may arise.

### Alkaline Substance

The alkaline substance acts as a hydrolytic condensation reaction catalyst for the methyltrimethoxysilane and the (meth)acryloxyalkyltrimethoxysilane. The alkaline substance may be of one type used alone or two or more may be used together.

The alkaline substance is not particularly limited. Examples of alkaline substances that may be used include alkali metal hydroxides such as potassium hydroxide, sodium hydroxide and lithium hydroxide; alkaline earth metal hydroxides such as calcium hydroxide and barium hydroxide; alkali metal carbonates such as potassium carbonate and sodium carbonate; ammonia; tetralkylammonium hydroxides such as tetramethylammonium hydroxide and tetraethylammonium hydroxide; and amines such as monomethylamine, monoethylamine, monopropylamine, monobutylamine, monopentylamine, dimethylamine, diethylamine, trimethylamine, triethanolamine and ethylenediamine. Of these, ammonia is most suitable because it can easily be removed from the resulting silicone particle powder by evaporation. A commercially available ammonia water solution may be used as the ammonia.

The alkaline substance may be added directly as is or may be added as an alkaline aqueous solution. The alkaline substance is preferably included in the hydrolytic condensation reaction dispersion prior to addition of the methyltrimethoxysilane and the (meth)acryloxyalkyltrimethoxysilane. When the alkaline substance is added following addition of the methyltrimethoxysilane and the (meth)acryloxyalkyltrimethoxysilane, the polyorganosilsesquioxane sometimes fails to cover the surfaces of the spherical silicone elastomer particles.

The amount of the alkaline substance added is an amount such that the pH of the hydrolytic condensation reaction dispersion is in the range of preferably from 10.0 to 13.0, and more preferably from 10.5 to 12.5. When the alkaline substance is added in an amount such that the pH becomes from 10.0 to 13.0, the hydrolytic condensation reaction between the methyltrimethoxysilane and the (meth)acryloxyalkyltrimethoxysilane proceeds, resulting in a product in which coverage of the spherical silicone elastomer particle surfaces by the polyorganosilsesquioxane is adequate.

### One or More Substances Selected from Cationic Surfactants and Cationic Water-Soluble Polymeric Compounds

These ingredients may be of one type used alone or two or more types may be used in suitable combination. They have the action of increasing the ability of the polyorganosilsesquioxane having methylsilsesquioxane units and (meth)acryloxyalkylsilsesquioxane units to cover the surfaces of the spherical silicone elastomer particles. This makes it possible to produce silicone particles which have a low tendency to agglomerate and a high dispersibility in resins.

The cationic surfactant is not particularly limited, and is exemplified by the same substances as the cationic surfactants mentioned above. The cationic water-soluble polymeric compound is also not particularly limited. Examples include polymers of dimethyldiallylammonium chloride, vinylimidazoline polymers, polymers of methylvinylimidazolium chloride, polymers of acryloyl ethyltrimethylammonium chloride, polymers of methacryloyl ethyltrimethylammonium chloride, polymers of acrylamide propyltrimethylammonium chloride, polymers of methacrylamide propyltrimethylammonium chloride, polymers of epichlorohydrin/dimethylamine, ethyleneimine polymers, quaternarized products of ethyleneimine polymers, polymers of allylamine hydrochloride, polylysine, cationic starches, cationized celluloses, chitosan, and derivatives of any of the above obtained by copolymerizing a nonionic group or anionic group-containing monomer with these.

The amount in which one or more substance selected from cationic surfactants and cationic water-soluble polymeric compounds is added per 100 parts by weight of water is in the range of preferably from 0.001 to 1 part by weight, and more preferably from 0.005 to 0.5 part by weight. At an amount of addition below 0.001 part by weight, the ability of the polyorganosilsesquioxane to cover the surfaces of the spherical silicone elastomer particles may become low; at more than 1 part by weight, the polyorganosilsesquioxane may have difficulty coating the surfaces of the spherical silicone elastomer particles. In cases where spherical silicone elastomer particles produced in the form of a cationic surfactant-containing aqueous dispersion are used, the cationic surfactant within the aqueous dispersion should be included in the above-indicated amount.

### Methyltrimethoxysilane and (Meth)acryloxyalkyltrimethoxysilane

The methyltrimethoxysilane is a compound of general formula (8) below

CH₃Si(OCH₃)₃ (8),

and the (meth)acryloxyalkyltrimethoxysilane is a compound of formula (9) or (10) below 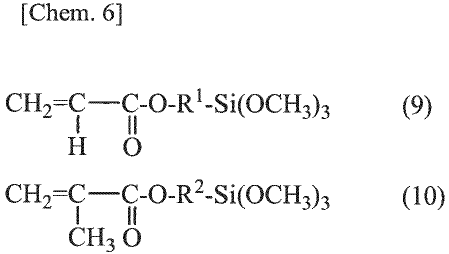 (wherein R¹ is an alkylene group of 2 to 6 carbon atoms, and R² is an alkylene group of 2 to 6 carbon atoms).

R¹ and R² are alkylene groups of 2 to 6 carbon atoms. Specific examples of the alkylene groups of 2 to 6 carbon atoms include methylene, ethylene, propylene, butylene, pentylene and hexylene groups. Propylene groups are especially preferred.

The molar ratio between the methyltrimethoxysilane and the (meth)acryloxyalkyltrimethoxysilane becomes the molar ratio between the methylsilsesquioxane units and the (meth)acryloxyalkylsilsesquioxane units on the polyorganosilsesquioxane produced by hydrolytic condensation. Therefore, the preferred range in the ratio between the methyltrimethoxysilane and the (meth)acryloxyalkyltrimethoxysilane is the same as the above-indicated ratio between the methylsilsesquioxane units and the (meth)acryloxyalkylsilsesquioxane units on the polyorganosilsesquioxane, the ratio of methyltrimethoxysilane to (meth)acryloxyalkyltrimethoxysilane being preferably from 99:1 to 10:90, more preferably from 99:1 to 50:50, and even more preferably from 95:5 to 70:30.

In cases where one or more selected from R⁷₂SiO_{3/2} units, R⁸₂SiO_{2/2} units, R⁸₃SiO_{1/2} units and SiO_{4/2} units are introduced into the polyorganosilsesquioxane, one or more corresponding compound selected from R⁷₂Si(OR⁹)₃, R⁸₂Si(OR⁹)₂, R⁸₃SiOR⁹ and Si(OR⁹)₄ may be added. Here, R⁷ and R⁸ are as described above. R⁹ is an unsubstituted monovalent hydrocarbon group of 1 to 6 carbon atoms. Examples of R⁹ include methyl, ethyl, propyl, butyl, pentyl and hexyl groups. From the standpoint of reactivity, methyl groups are preferred.

The amounts of methyltrimethoxysilane and (meth)acryloxyalkyltrimethoxysilane added are set such that the amount of polyorganosilsesquioxane per 100 parts by weight of the above spherical silicone elastomer particles is in the range of 0.5 to 25 parts by weight, and preferably from 1 to 15 parts by weight.

### Hydrolytic Condensation Reaction

The methyltrimethoxysilane and the (meth)acryloxyalkyltrimethoxysilane are added to the dispersion (hydrolytic condensation reaction dispersion) containing the spherical silicone elastomer particles, water, an alkaline substance and one or more substance selected from cationic surfactants and cationic water-soluble polymeric compounds, and hydrolytic condensation is effected. That is, the polyorganosilsesquioxane deposits on the surfaces of the spherical silicone elastomer particles, as a result of which the surfaces of the spherical silicone elastomer particles become covered with the polyorganosilsesquioxane.

Methyltrimethoxysilane and (meth)acryloxyalkyltrimethoxysilane addition is preferably carried out under stirring using an ordinary stirrer having, for example, a propeller element or a flat-blade element. The methyltrimethoxysilane and (meth)acryloxyalkyltrimethoxysilane may be added all at once, although addition over a period of time is preferred. The dropwise addition time is preferably in the range of from 1 minute to 3 hours, and more preferably from 10 minutes to one hour. Also, the methyltrimethoxysilane and (meth)acryloxyalkyltrimethoxysilane may be added after being mixed together and dissolved, or may be added separately.

The temperature at this time is set in the range of preferably from 0 to 60°C, and more preferably from 0 to 40°C. When the temperature is between 0 and 60°C, the polyorganosilsesquioxane more easily covers the surfaces of the spherical silicone elastomer particles.

Even following addition of the methyltrimethoxysilane and the (meth)acryloxyalkyltrimethoxysilane, stirring is preferably continued up until the hydrolytic condensation reaction between the methyltrimethoxysilane and the (meth)acryloxyalkyltrimethoxysilane reaches completion. In order to have the hydrolytic condensation reaction reach completion, the reaction may be carried out at room temperature or may be carried out under heating at between about 40°C and about 100°C.

### Powderization

Following the hydrolytic condensation reaction, water is removed from the resulting aqueous dispersion of the inventive silicone particles. Water removal can be carried out by heating the aqueous dispersion following the reaction under normal pressure or reduced pressure. Specifically, this can be carried out with, for example, a method that removes water by having the dispersion stand at rest under heating, a method that removes water while stirring and causing the dispersion to flow under applied heat, a method that atomizes and disperses the dispersion in a stream of hot air such as with a spray dryer, or a method that utilizes a fluidized heating medium. Pretreatment for this operation may involve concentrating the dispersion by a method such as dewatering under applied heat, filtration separation, centrifugal separation or decantation; if necessary, the dispersion may be washed with water or alcohol.

In cases where the product obtained by removing water from the aqueous dispersion following the reaction has agglomerated, silicone particles can be obtained by disintegration with a grinding mill such as a jet mill, ball mill or hammer mill.

### SILICONE PARTICLES

The silicone particles of the invention have a volume mean particle size of preferably from 0.1 to 100 µm, more preferably from 0.5 to 40 µm, and even more preferably from 1 to 20 µm. The method of measuring the volume mean particle size is the same as the method of measuring the volume mean particle size of the spherical silicone elastomer particles. The silicone particles are measured after being dispersed in water using a surfactant. The silicone particles of the invention contain (meth)acryloxyalkyl groups on the particle surfaces. This can be confirmed by IR analysis using the diffuse reflectance method.

Because the silicone particles of the invention have rubbery elasticity, a low tendency to agglomerate and a high dispersibility in resin, they are useful in, for example, electronic and electrical component packaging, printed boards and adhesives.

### EXAMPLES

The invention is illustrated more fully below by way of Examples and Comparative Examples, although the invention is not limited by these Examples. In the Examples, the kinematic viscosities are measured values obtained at 25°C with an Ostwald viscometer, and the symbol '%' indicating concentrations and content ratios stands for "percent by weight." Evaluations of dispersibility were carried out as follows.

### Example 1

A glass beaker with a 1-liter capacity was charged with 150 g of the methylvinylpolysiloxane of formula (11) below having a kinematic viscosity of 8 mm²/s and 50 g of the methylhydrogenpolysiloxane of formula (12) below having a kinematic viscosity of 117 mm²/s (the amount included being such that the number of hydrosilyl groups per olefinically unsaturated group is 1.15), and the flask contents were then stirred at 2,000 rpm using a homogenizing mixer and thereby dissolved. Next, 1 g of polyoxyethylene lauryl ether (number of moles of ethylene oxide added = 9) and 200 g of water were added, and stirring was carried out at 7,000 rpm using a homogenizing mixer, whereupon an oil-in-water emulsion formed, thickening was observed and stirring was continued for another 15 minutes. Next, dilution was carried out by adding 597 g of water under stirring at 2,000 rpm. The diluted emulsion was passed through a homogenizer under a pressure of 100 MPa, giving a uniform white emulsion.

This emulsion was transferred to a glass flask having a 1-liter capacity and equipped with a stirrer that uses an anchor stirring element, temperature-conditioned to between 15°C and 20°C, and a mixed solution of 0.5 g of an isododecane solution of a platinum-vinyl group-containing siloxane complex (platinum content, 0.5%) with polyoxyethylene lauryl ether (number of moles of ethylene oxide added = 9) was added thereto under stirring. Stirring was carried out for 12 hours at the same temperature, giving an aqueous dispersion of silicone elastomer particles.

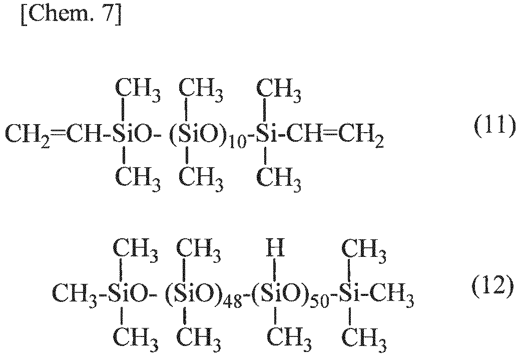

The shapes of the silicone elastomer particles in the resulting aqueous dispersion were examined under an optical microscope and found to be spherical. The volume mean particle size was measured using an electrical sensing zone particle size analyzer (Multisizer 3, from Beckman Coulter KK), and found to be 2 µm.

The hardness of the silicone elastomer making up the silicone elastomer particles was measured as follows. The methylvinylpolysiloxane of above formula (11), the methylhydrogenpolysiloxane of above formula (12) and an isododecane solution of a chloroplatinic acid-vinyl group-containing disiloxane complex (platinum content, 0.5%) were mixed together in the above-indicated proportions and cast into an aluminum Petri dish to a thickness of 10 mm. After being left to stand at 25°C for 24 hours, the material was heated for one hour in a 50°C thermostatic chamber, giving a tack-free silicone elastomer. The hardness of the silicone elastomer was measured with a Type A durometer, and found to be 75.

A 2-liter glass flask equipped with a stirrer that uses an anchor stirring element was charged with 750 g of the aqueous dispersion of spherical silicone elastomer particles obtained above, 213 g of water, 19 g of 28% ammonia water, and 1 g of a 40% aqueous solution of dimethyldiallylammonium chloride polymer (trade name: ME Polymer H40W, from Toho Chemical Industry Co., Ltd.) (an amount that sets the dimethyldiallylammonium chloride polymer to 0.05 part by weight per 100 parts by weight of water), and the flask contents were stirred. The pH of the liquid at this time was 11.3. After temperature conditioning at between 5°C and 10°C, 11.6 g of methyltrimethoxysilane and 5.3 g of 3-methacryloxypropyltrimethoxysilane (an amount that sets the polyorganosilsesquioxane following the hydrolytic condensation reaction to 4.7 parts by weight per 100 parts by weight of the spherical silicone elastomer particles; molar ratio between methyltrimethoxysilane and 3-methacryloxypropyltrimethoxysilane = 80:20) were added dropwise over 20 minutes, during which time the liquid temperature was held at between 5°C and 10°C, following which 1 hour of stirring was carried out. Next, heating was carried out to between 55°C to 60°C and one hour of stirring was carried out while maintaining this temperature, thereby bringing to completion the hydrolytic condensation reaction between the methyltrimethoxysilane and the 3-methacryloxypropyltrimethoxysilane.

The liquid that was obtained by carrying out a hydrolytic condensation reaction between the methyltrimethoxysilane and the 3-methacryloxypropyltrimethoxysilane in the aqueous dispersion of silicone elastomer particles was dewatered to a water content of about 30% using a press filter. The dewatered material was transferred to a 2-liter glass flask equipped with a stirrer that uses an anchor stirring element, 1,000 g of water was added and stirring was carried out for 30 minutes, following which dewatering was carried out using a press filter. The dewatered material was again transferred to a 2-liter glass flask equipped with a stirrer that uses an anchor stirring element, 1,000 g of water was added and stirring was carried out for 30 minutes, following which dewatering was carried out using a press filter. The dewatered material was dried at a temperature of 105°C in a hot air fluidized bed dryer and the dried material was disintegrated in a jet mill, giving silicone particles having flowability.

The resulting silicone particles were dispersed in water using a surfactant and measured with an electrical sensing zone particle size analyzer (Multisizer 3, from Beckman Coulter KK), whereupon the particle size distribution was the same as for the above aqueous dispersion of silicone elastomer particles, and the volume mean particle size was 2 µm.

These silicone particles were examined with an electron microscope and were confirmed to be particles in which the spherical silicone elastomer particle surfaces are covered with polyorganosilsesquioxane in particulate form.

Upon carrying out IR analysis by the diffuse reflectance method on these silicone particles, C=O groups were detected, from which it was concluded that 3-methacryloxypropylsilsesquioxane units are contained within the polyorganosilsesquioxane covering the particles.

### Example 2

An aqueous dispersion of spherical silicone elastomer particles obtained by the same procedure as in Example 1 was transferred in an amount of 750 g to a 2-liter glass flask equipped with a stirrer that uses an anchor stirring element, and the flask was also charged with 212 g of water, 19 g of 28% ammonia water and 1 g of a 40% aqueous solution of dimethyldiallylammonium chloride polymer (trade name: ME Polymer H40W, from Toho Chemical Industry Co., Ltd.) (an amount that sets the dimethyldiallylammonium chloride polymer to 0.05 part by weight per 100 parts by weight of water), and the flask contents were stirred. The pH of the liquid at this time was 11.3. After temperature conditioning at between 5°C and 10°C, 15.0 g of methyltrimethoxysilane and 3.0 g of 3-methacryloxypropyltrimethoxysilane (an amount that sets the polyorganosilsesquioxane following the hydrolytic condensation ratio to 4.7 parts by weight per 100 parts by weight of the spherical silicone elastomer particles; molar ratio between methyltrimethoxysilane and 3-methacryloxypropyltrimethoxysilane = 90:10) were added dropwise over 20 minutes, during which time the liquid temperature was held at between 5°C and 10°C, following which 1 hour of stirring was carried out. Next, heating was carried out to between 55°C and 60°C and one hour of stirring was carried out while maintaining this temperature, thereby bringing to completion the hydrolytic condensation reaction between the methyltrimethoxysilane and the 3-methacryloxypropyltrimethoxysilane.

The liquid that was obtained by carrying out a hydrolytic condensation reaction between the methyltrimethoxysilane and the 3-methacryloxypropyltrimethoxysilane in an aqueous dispersion of silicone elastomer particles was dewatered to a water content of about 30% using a press filter. The dewatered material was transferred to a 2-liter glass flask equipped with a stirrer that uses an anchor stirring element, 1,000 g of water was added and stirring was carried out for 30 minutes, following which dewatering was carried out using a press filter. The dewatered material was again transferred to a 2-liter glass flask equipped with a stirrer that uses an anchor stirring element, 1,000 g of water was added and stirring was carried out for 30 minutes, following which dewatering was carried out using a press filter. The dewatered material was dried at a temperature of 105°C in a hot air fluidized bed dryer and the dried material was disintegrated in a jet mill, giving silicone particles having flowability.

The resulting silicone particles were dispersed in water using a surfactant and measured with an electrical sensing zone particle size analyzer (Multisizer 3, from Beckman Coulter KK), whereupon the particle size distribution was the same as for the above-mentioned aqueous dispersion of silicone elastomer particles and the volume mean particle size was 2 µm.

These silicone particles were examined with an electron microscope and were confirmed to be particles in which the spherical silicone elastomer particle surfaces are covered with polyorganosilsesquioxane in particulate form.

Upon carrying out IR analysis by the diffuse reflectance method on these silicone particles, C=O groups were detected, from which it was concluded that 3-methacryloxypropylsilsesquioxane units are contained within the polyorganosilsesquioxane covering the particles.

### Example 3

A 2-liter glass flask equipped with a stirrer that uses an anchor stirring element was charged with 750 g of an aqueous dispersion of spherical silicone elastomer particles obtained by the same procedure as in Example 1, 212 g of water, 19 g of 28% ammonia water and 1 g of a 40% aqueous solution of dimethyldiallylammonium chloride polymer (trade name: ME Polymer H40W, from Toho Chemical Industry Co., Ltd.) (an amount that sets the dimethyldiallylammonium chloride polymer to 0.05 part by weight per 100 parts by weight of water), and the flask contents were stirred. The pH of the liquid at this time was 11.3. After temperature conditioning at between 5°C and 10°C, 15.3 g of methyltrimethoxysilane and 2.9 g of 3-acryloxypropyltrimethoxysilane (an amount that sets the polyorganosilsesquioxane following the hydrolytic condensation ratio to 4.7 parts by weight per 100 parts by weight of the spherical silicone elastomer particles; the molar ratio between methyltrimethoxysilane and 3-methacryloxypropyltrimethoxysilane is 90:10) were added dropwise over 20 minutes, during which time the liquid temperature was held at between 5°C and 10°C, following which 1 hour of stirring was carried out. Next, heating was carried out to between 55°C and 60°C and one hour of stirring was carried out while maintaining this temperature, thereby bringing to completion the hydrolytic condensation reaction between the methyltrimethoxysilane and the 3-methacryloxypropyltrimethoxysilane.

The liquid that was obtained by carrying out a hydrolytic condensation reaction between the methyltrimethoxysilane and the 3-methacryloxypropyltrimethoxysilane in an aqueous dispersion of silicone elastomer particles was dewatered to a water content of about 30% using a press filter. The dewatered material was transferred to a 2-liter glass flask equipped with a stirrer that uses an anchor stirring element, 1,000 g of water was added and stirring was carried out for 30 minutes, following which dewatering was carried out using a press filter. The dewatered material was again transferred to a 2-liter glass flask equipped with a stirrer that uses an anchor stirring element, 1,000 g of water was added and stirring was carried out for 30 minutes, following which dewatering was carried out using a press filter. The dewatered material was dried at a temperature of 105°C in a hot air fluidized bed dryer and the dried material was disintegrated in a jet mill, giving silicone particles having flowability.

The resulting silicone particles were dispersed in water using a surfactant and measured with an electrical sensing zone particle size analyzer (Multisizer 3, from Beckman Coulter KK), whereupon the particle size distribution was the same as for the above aqueous dispersion of silicone elastomer particles, and the volume mean particle size was 2 µm.

These silicone particles were examined with an electron microscope and were confirmed to be particles in which the spherical silicone elastomer particle surfaces are covered with polyorganosilsesquioxane in particulate form.

Upon carrying out IR analysis by the diffuse reflectance method on these silicone particles, C=O groups were detected, from which it was concluded that 3-methacryloxypropylsilsesquioxane units are contained within the polyorganosilsesquioxane covering the particles.

### Example 4

Aside from using 1.3 g of 30% dodecyltrimethylammonium chloride (trade name: Cation BB, from NOF Corporation) (an amount that sets the dodecyltrimethylammonium chloride to 0.05 part by weight per 100 parts by weight of water) instead of the 40% aqueous solution of dimethyldiallylammonium chloride polymer (trade name: ME Polymer H40W, from Toho Chemical Industry Co., Ltd.) used in Example 1, silicone particles were obtained in the same way as in Example 1.

The resulting silicone particles were dispersed in water using a surfactant and measured using an electrical sensing zone particle size analyzer (Multisizer 3, from Beckman Coulter KK), whereupon the particle size distribution was the same as for the above aqueous dispersion of silicone elastomer particles, and the volume mean particle size was 2 µm.

These silicone particles were examined with an electron microscope and were confirmed to be particles in which the spherical silicone elastomer particle surfaces are covered with polyorganosilsesquioxane in particulate form.

Upon carrying out IR analysis by the diffuse reflectance method on these silicone particles, C=O groups were detected, from which it was concluded that 3-methacryloxypropylsilsesquioxane units are contained within the polyorganosilsesquioxane covering the particles.

### Comparative Example 1

Aside from not using the 40% aqueous solution of dimethyldiallylammonium chloride polymer (trade name: ME Polymer H40W, from Toho Chemical Industry Co., Ltd.) used in Example 1, silicone particles were obtained in the same way as in Example 1.

The resulting silicone particles were dispersed in water using a surfactant and measured with an electrical sensing zone particle size analyzer (Multisizer 3, from Beckman Coulter KK), whereupon, compared with the above aqueous dispersion of silicone elastomer particles, the particle size distribution had many particles in the large particle size region and the volume mean particle size was 3 µm.

These silicone particles were examined with an electron microscope, whereupon they were confirmed to be particles in which the spherical silicone elastomer particle surfaces are covered with polyorganosilsesquioxane in particulate form.

Upon carrying out IR analysis by the diffuse reflectance method on these silicone particles, C=O groups were detected, from which it was concluded that 3-methacryloxypropylsilsesquioxane units are contained within the polyorganosilsesquioxane covering the particles.

Evaluation of the non-agglomerability (measurement of mesh pass ratio) was carried out by the following method on the silicone particles obtained as described above.

### Non-Agglomerability

A 60 mesh screen, a 100 mesh screen and a 200 mesh screen were stacked in that order from above, about 2 g of a particle sample was weighed out onto the 60 mesh screen and, using a powder characteristics tester (Powder Tester model PT-E, from Hosokawa Micron Corporation), vibrations having an amplitude of 2 mm were applied for 90 seconds and the amounts of sample that passed through the respective screens were measured. The mesh pass ratios are indicated in percent (%), with a higher value being judged to indicate a higher non-agglomerability.

**Table 1**

| | Cationic surfactant or Cationic water-soluble polymeric compound | Alkoxysilane | Mean particle size of silicone particles (µm) | Non-agglomerability (mesh pass ratio, %) | | |
|---|---|---|---|---|---|---|
| | | | | 60 mesh | 100 mesh | 200 mesh |
| Example 1 | dimethyldiallylammonium chloride polymer | methyltrimethoxysilane methacryloxypropyltrimethoxysilane <molar ratio = 80:20> | 2 | 86 | 58 | 46 |
| Example 2 | dimethyldiallylammonium chloride polymer | methyltrimethoxysi lane methacryloxypropyltrimethoxysilane <molar ratio = 90:10> | 2 | 95 | 75 | 68 |
| Example 3 | dimethyldiallylammonium chloride polymer | methyltrimethoxysilane acryloxypropyltrimethoxysilane <molar ratio = 90:10> | 2 | 98 | 81 | 73 |
| Example 4 | dodecyltrimethylammonium chloride | methyltrimethoxysilane methacryloxypropyltrimethoxysilane <molar ratio = 80:20> | 2 | 75 | 60 | 38 |
| Comparative Example 1 | (not used) | meth yltrimethoxysilane methacryloxypropyltrimethoxysilane <molar ratio = 80:20> | 3 | 25 | 5 | 0 |

The silicone particles in Examples 1 to 4, which were obtained by inducing the hydrolytic condensation of methyltrimethoxysilane and (meth)acryloxypropyltrimethoxysilane in the presence of a cationic surfactant or a cationic water-soluble polymeric compound and coating the surface of spherical silicone elastomer particles with a polyorganosilsesquioxane having (meth)acryloxypropylsilsesquioxane units, have a high non-agglomerability, and therefore are presumed to have a good dispersibility in resins. On the other hand, in Comparative Example 1, a cationic surfactant or cationic water-soluble polymeric compound was not used and so the polyorganosilsesquioxane coverability on the surfaces of spherical silicone elastomer particles is poor, the non-agglomerability is low and the dispersibility in resins is presumed to be poor.

## Claims

1. Silicone particles comprising spherical silicone elastomer particles having a volume mean particle size of from 0.1 to 100 µm and covered on surfaces thereof with a polyorganosilsesquioxane containing methylsilsesquioxane units of compositional formula (1) below
CH₃SiO_{3/2} (1)
and (meth)acryloxyalkylsilsesquioxane units of compositional formula (2) or (3) below 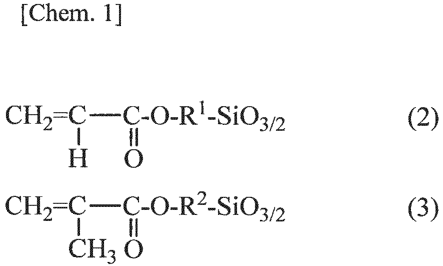 (wherein R¹ is an alkylene group of 2 to 6 carbon atoms and R² is an alkylene group of 2 to 6 carbon atoms),
which silicone particles are obtained by the hydrolytic condensation of methyltrimethoxysilane and (meth)acryloxyalkyltrimethoxysilane in the presence of spherical silicone elastomer particles having a volume mean particle size of from 0.1 to 100 µm, water, an alkaline substance and one or more substances selected from cationic surfactants and cationic water-soluble polymeric compounds, and have an amount of polyorganosilsesquioxane that is from 0.5 to 25 parts by weight per 100 parts by weight of the spherical silicone elastomer particles.

2. Silicone particles of claim 1 wherein the molar ratio of methylsilsesquioxane units to (meth)acryloxyalkylsilsesquioxane units in the polyorganosilsesquioxane (methylsilsesquioxane units : (meth)acryloxyalkylsilsesquioxane units) is from 99:1 to 10:90.

3. A method of producing silicone particles which comprise spherical silicone elastomer particles having a volume mean particle size of from 0.1 to 100 µm and are covered on surfaces thereof with a polyorganosilsesquioxane containing methylsilsesquioxane units of compositional formula (1) below
CH₃SiO_{3/2} (1)
and (meth)acryloxyalkylsilsesquioxane units of compositional formula (2) or (3) below 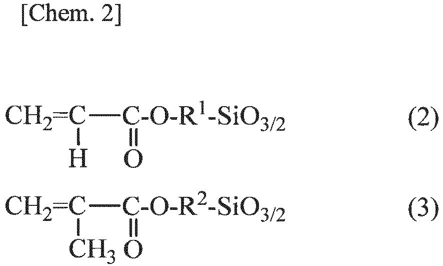 (wherein R¹ is an alkylene group of 2 to 6 carbon atoms, and R² is an alkylene group of 2 to 6 carbon atoms)
and which have an amount of polyorganosilsesquioxane that is from 0.5 to 25 parts by weight per 100 parts by weight of the spherical silicone elastomer particles, the method comprising the step of effecting the hydrolytic condensation of methyltrimethoxysilane and (meth)acryloxyalkyltrimethoxysilane in the presence of spherical silicone elastomer particles having a volume mean particle size of from 0.1 to 100 µm, water, an alkaline substance, and one or more substance selected from cationic surfactants and cationic water-soluble polymeric compounds.

4. A production method of claim 3, wherein the amount of the one or more substances selected from cationic surfactants and cationic water-soluble polymeric compounds is from 0.001 to 1 part by weight per 100 parts by weight of water.
